# EUROPÄISCHE PATENTANMELDUNG

(11) **EP 2 053 169 A2**
(43) Veröffentlichungstag der Anmeldung: **29.04.2009**
(21) Anmeldenummer: 08017264.6
(22) Anmeldetag: 01.10.2008
(51) Int. Cl.: E03D 1/26

(54) **Vorrichtung zum schnellen und lösbaren Verbinden, insbesondere für das Verbinden eines Behälters in Form eines Wasserkastens außerhalb der Wand mit einer Sanitäreinrichtung**

(30) Priorität: 24.10.2007 IT PD20070354
(71) Anmelder: fischerwerke GmbH & Co. KG, 72178 Waldachtal (DE)
(72) Erfinder: Tresoldi, Antonio, 35020 Masera di Padova (PD) (IT)

(57) **Zusammenfassung**

Die vorliegende Erfindung betrifft eine Vorrichtung (10) zum schnellen und lösbaren Verbinden, insbesondere für das Verbinden eines Behälters (11), in Form eines Wasserkastens außerhalb der Wand, mit einer entsprechenden Sanitäreinrichtung (12).

Die Sanitäreinrichtung (12) enthält ein Stützelement (13) für den Behälter (11), an dem eine Einmündungsöffnung (14) für das Auslasswasser definiert ist, während der Behälter (11) eine Auslassmuffe (15) für das Wasser vorsieht, die mit der Einmündungsöffnung (14) übereinstimmend geformt ist und beim Auflegen des Behälters (11) auf das Stützelement (13) gleichzeitig in diese einführbar ist.

Diese Verbindungsvorrichtung (10) enthält zwei im Wesentlichen ringförmige Flansche (16, 17), von denen einer so mit dem Behälter (11) verbunden ist, dass er die Auslassmuffe (15) umgibt, während der andere Flansch mit dem Stützelement (13) so verbunden ist, dass er die Einmündungsöffnung (14) umgibt; es sind ferner Mittel zum schnellen und lösbaren wechselseitigen Koppeln der zwei Flansche (16, 17) vorgesehen.

## Beschreibung

Die vorliegende Erfindung betrifft eine Vorrichtung zum schnellen Verbinden, insbesondere für das Verbinden eines Behälters, in Form eines Wasserkastens außerhalb der Wand, mit einer Sanitäreinrichtung.

Heute sind verschiedene Vorrichtungen zum Verbinden von Behältern in Form eines Kastens außerhalb der Wand mit entsprechenden Sanitäreinrichtungen bekannt.

Der Behälter liegt im Allgemeinen entsprechend einem Stützelement, das gewöhnlich aus einer Konsole hinter der Sanitäreinrichtung besteht, auf der Sanitäreinrichtung auf.

Dieses Stützelement hat eine Einmündungsöffnung für das für die Schüssel der Sanitäreinrichtung vorgesehene Auslasswasser, und entsprechend hat der Behälter eine Auslassmuffe, die beim Auflegen des Behälters auf das Stützelement gleichzeitig in die Einmündungsöffnung einsetzbar ist.

Eine heute bekannte Verbindungsvorrichtung zwischen dem Behälter und dem Stützelement umfasst eine Platte, die eine Einführöffnung für die Muffe vorsieht.

Diese Platte ist an ihrer einen Seite so mit dem Behälter verbunden, dass sie die Muffe umgibt, und hat Zapfen aus Kunststoff, die von ihrer anderen Seite vorspringen.

Das Stützelement sieht in dem die Einmündungsöffnung umgebenden Bereich Einführlöcher für diese Zapfen vor.

Das Verbinden von Behälter und Sanitäreinrichtung erfolgt also durch Verbinden der Platte mit dem Behälter mit den vorspringenden Zapfen.

Wenn also der Behälter auf das Stützelement aufgelegt wird, wird die Muffe in die Einmündungsöffnung und werden die Zapfen in die entsprechenden Einführlöcher eingeführt.

Diese Lösung bietet eine Verbindungsvorrichtung, die schnell und lösbar zu installieren ist, die aber andererseits einige Nachteile hat, wie die Tatsache, dass sie nicht in der Fabrik vorbereitet werden kann, sondern die Montage bei der Installation der Sanitäreinrichtung erfordert. Zudem verleihen ihr die Zapfen aus Kunststoff nur geringe Steifigkeit und Festigkeit.

Eine andere bekannte Lösung schlägt das Verbinden mittels Gewindeelementen, wie Mutterschrauben oder Stiftschrauben vor.

In diesem Fall sind sowohl der Behälter als auch das Stützelement mit Löchern vorbereitet, die sich entsprechen, wenn der Behälter, mit in die Einmündungsöffnung eingeführter Muffe, korrekt auf dem Stützelement aufliegt.

Durch Einführen der Schäfte der Schrauben oder der Stiftschrauben in diese entsprechenden Löcher des Behälters und des Stützelements und durch Festziehen der jeweiligen Muttern darauf werden Behälter und Verbindungselement fest miteinander verbunden.

Wie dem Fachmann bekannt ist, ist diese Art der Verbindung folglich viel fester und viel steifer als die vorher beschriebene, obwohl sie dennoch verschiedene Nachteile hat, wie die Tatsache, dass sie das Vorbereiten von Löchern in der Bodenwand des Behälters, entsprechend seinem Auflagebereich auf dem Stützelement erfordert, was das Risiko von Undichtigkeiten mit sich bringt, auch wenn Dichtungen verwendet werden.

Andere Nachteile dieser Verbindungsvorrichtung bestehen darin, dass
- sie nicht von dem Hersteller vorbereitet werden kann, da sie während der Installation der Sanitäreinrichtung und des Behälters montiert werden muss,
- das Festziehen der Muttern der Schrauben oder der Stiftschrauben, um leicht zu sein, einen bequemen Zugang zu dem Raum unter dem Stützelement erfordert, der jedoch bekanntlich häufig eng ist, da er von der Wand begrenzt ist, an der die Sanitäreinrichtung befestigt wird.

Wenn das Stützelement keine Konsole, sondern eine einfache Auflagefläche ist, hat diese Lösung zudem den Nachteil, dass sie den Zusammenbau von Behälter und Sanitäreinrichtung vor ihrem endgültigen Positionieren erfordert, da der Benutzer, sobald sie positioniert ist, keine Möglichkeit mehr hat, den unteren Teil einer derartigen Auflagefläche zu erreichen, um das Festziehen der Muttern auszuführen.

Die Aufgabe der vorliegenden Erfindung besteht also darin, eine Vorrichtung zum Verbinden des Behälters mit dem entsprechenden Stützelement anzugeben, die vor der Installation der Sanitäreinrichtung vorbereitet werden kann.

Im Rahmen dieser Aufgabe besteht ein Ziel der Erfindung darin, eine Verbindungsvorrichtung anzugeben, die es erlaubt, den Behälter auf einfachere und schnellere Weise mit der Sanitäreinrichtung zu verbinden als es bei den heute bekannten Vorrichtungen der Fall ist.

Ein weiteres Ziel der Erfindung besteht darin, eine Verbindungsvorrichtung zu realisieren, die eine wirksame Dichtung gewährleistet, indem Undichtigkeiten und Durchtritte von Wasser aus dem Behälter verhindert werden, zumindest wie bei heute bekannten Vorrichtungen.

Ein weiteres Ziel der Erfindung ist es, eine Verbindungsvorrichtung mit einfacher Struktur anzugeben, die zu mäßigen Kosten hergestellt werden kann.

Diese Aufgabe sowie diese und andere Ziele, die im Folgenden deutlicher werden, löst eine Vorrichtung zum schnellen und lösbaren Verbinden, insbesondere für das Verbinden eines Behälters, in Form eines Wasserkastens außerhalb der Wand, mit einer Sanitäreinrichtung, wobei die Sanitäreinrichtung ein Stützelement für den Behälter enthält, wobei an dem Stützelement eine Einmündungsöffnung für das Auslasswasser definiert ist, wobei der Behälter eine Auslassmuffe für das in ihm speicherbare Wasser vorsieht, die mit der Einmündungsöffnung übereinstimmend geformt ist und beim Auflegen des Behälters auf das Stützelement gleichzeitig in diese einführbar ist, dadurch gekennzeichnet, dass sie zwei im Wesentlichen ringförmige Flansche enthält, wobei einer der beiden Flansche so mit dem Behälter verbunden ist, dass er die Auslassmuffe umgibt, der andere der beiden Flansche so mit dem Stützelement verbunden ist, dass er die Einmündungsöffnung umgibt, wobei Mittel zum schnellen und lösbaren wechselseitigen Koppeln der zwei Flansche vorgesehen sind.

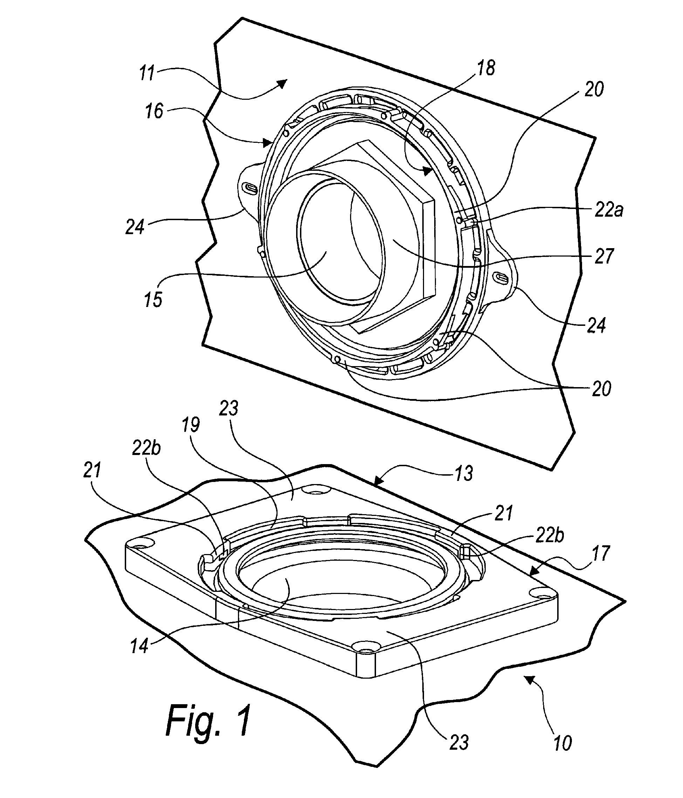

Weitere Eigenschaften und Vorteile der Erfindung ergeben sich größtenteils aus der Beschreibung eines bevorzugten, jedoch nicht ausschließlichen Ausführungsbeispiels der Verbindungsvorrichtung nach der Erfindung, das als nicht einschränkendes Beispiel in den beiliegenden Zeichnungen dargestellt ist, in denen
Figur 1 eine erfindungsgemäße Verbindungsvorrichtung in perspektivischer Ansicht zeigt;

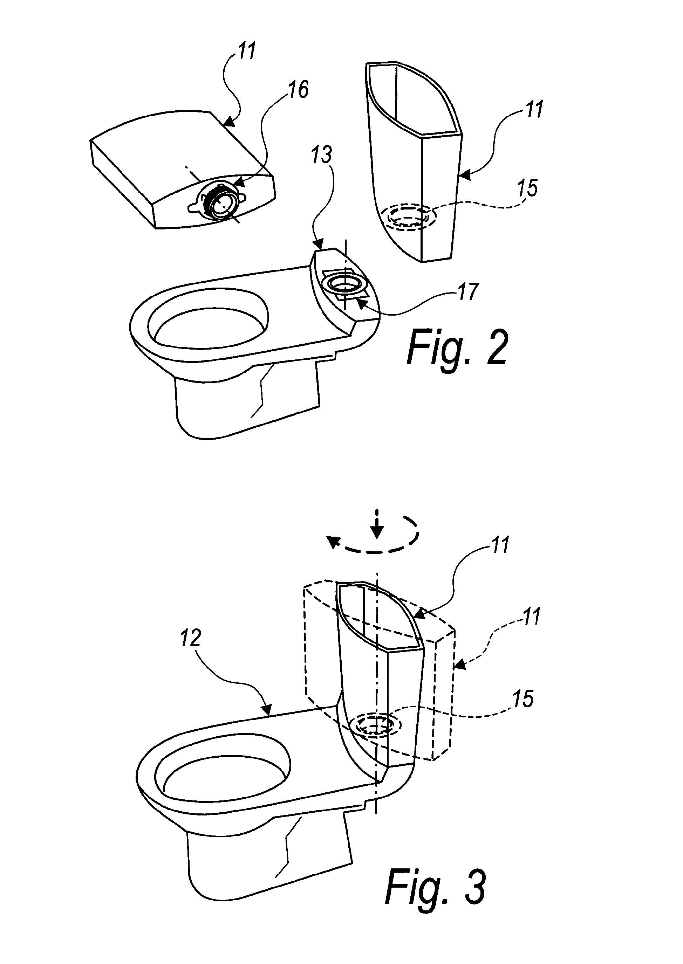

Figur 2 eine perspektivische Ansicht einer Sanitäreinrichtung und des entsprechenden Behälters in nicht zusammengebautem Zustand zeigt, die mit einer erfindungsgemäßen Verbindungsvorrichtung versehen sind;
Figur 3 ein Schema des Zusammenbaus einer Sanitäreinrichtung mit dem entsprechenden Behälter, die mit einer erfindungsgemäßen Verbindungsvorrichtung versehen sind, zeigt;

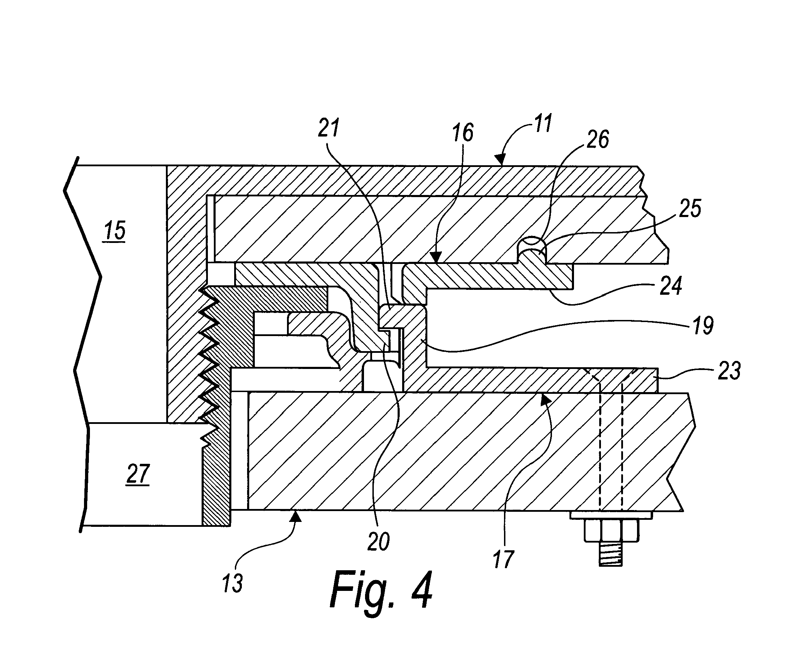

Figur 4 ein vergrößertes und teilweise geschnittenes Detail einer mit dem entsprechenden Behälter zusammengebauten Sanitäreinrichtung zeigt, die mit einer erfindungsgemäßen Verbindungsvorrichtung versehen sind.

Es sei darauf hingewiesen, dass alles, was sich im Laufe des Patentierungsverfahrens als bereits bekannt erweisen sollte, als nicht beansprucht und aus den Ansprüchen zu streichender Gegenstand erachtet wird.

Unter Bezugnahme auf die genannten Figuren ist mit dem Bezugszeichen 10 insgesamt eine Vorrichtung zum schnellen und lösbaren Verbinden, insbesondere für das Verbinden eines Behälters 11, in Form eines Wasserkastens außerhalb der Wand, mit einer Sanitäreinrichtung 12 bezeichnet.

Die Sanitäreinrichtung 12 enthält ein Stützelement 13 für den Behälter 11. An diesem Stützelement 13 ist eine Einmündungsöffnung 14 für das Auslasswasser definiert.

Der Behälter 11 sieht eine Auslassmuffe 15 für das in ihm speicherbare Wasser vor, die mit der Einmündungsöffnung 14 übereinstimmend geformt ist und beim Auflegen des Behälters 11 auf das Stützelement 13 gleichzeitig in sie einsetzbar ist.

Eine besondere Eigenschaft der erfindungsgemäßen Verbindungsvorrichtung besteht darin, dass sie zwei im Wesentlichen ringförmige Flansche 16 und 17 enthält.

Einer der zwei Flansche 16 und 17 ist mit dem Behälter 11 so verbunden, dass er die Auslassmuffe 15 umgibt, der andere ist mit dem Stützelement 13 so verbunden, dass er die Einmündungsöffnung 14 umgibt.

Ferner sind Mittel zum schnellen und lösbaren wechselseitigen Koppeln der zwei Flansche 16 und 17 vorgesehen.

Vorteilhafterweise umfassen die Koppelmittel zwei im Wesentlichen zylindrische und konzentrische Bünde 18 und 19, von denen
- ein erster Bund 18 mit ersten Zähnen 20 versehen ist, die von ihm in im Wesentlichen radialer Richtung nach außen vorspringen,
- wobei der zweite Bund 19 mit zweiten Zähnen 21 versehen ist, die von ihm in im Wesentlichen radialer Richtung nach innen vorspringen.

Der erste Bund 18 steht zweckmäßigerweise von einem ersten 16 der zwei Flansche 16 und 17 vor und ist in axialer Richtung in den zweiten Bund 19 einsetzbar, der von dem zweiten Flansch 17 hervorsteht.

Das Einsetzen des ersten Bunds 18 in den zweiten Bund 19 erfordert, dass die ersten Zähne 20 gegenüber den zweiten Zähnen 21 verschoben angeordnet sind.

Die Flansche 16 und 17 sind zweckmäßigerweise relativ zueinander umkehrbar um gemeinsame Symmetrieachsen der Bünde 18 und 19, von denen der erste 18 in den zweiten 19 eingesetzt ist, drehbar, um sie über das Eingreifen bzw. Lösen der ersten Zähne 20 mit bzw. von den zweiten Zähnen 21 miteinander zu koppeln

Die zwei miteinander gekoppelten Flansche 16 und 17 haben vorteilhafterweise den ersten Bund 18 in den zweiten Bund 19 eingesetzt und mit dem ersten Flansch 16 darin fest gedreht.

In dieser Konfiguration sind die ersten Zähne 20 zwischen die zweiten Zähne 21 geschoben und sind dort gekoppelt, und der erste Flansch 16 und analog die zweiten Zähne 21 sind zwischen die ersten Zähne 20 und den zweiten Flansch 17 geschoben.

Ferner sind vorzugsweise Endanschlagselemente, zweckmäßigerweise Endansätze 22a und 22b vorgesehen, die mit den ersten Zähnen 20 bzw. mit den zweiten Zähnen 21 verbunden sind und dazu geeignet sind, die Relativdrehung des ersten Flanschs 16 gegenüber dem zweiten Flansch 17 zu begrenzen, wenn der erste Bund 18 in den zweiten Bund 19 eingesetzt ist, sobald eine Konfiguration erreicht ist, in der die ersten Zähne 20 wie beschrieben mit den zweiten Zähnen 21 gekoppelt sind.

Der erste Flansch 16 ist zweckmäßigerweise mit dem Behälter 11 so verbunden, dass er die Auslassmuffe 15 umgibt, während der zweite Flansch 17 mit dem Stützelement 13 so verbunden ist, dass er die Einmündungsöffnung 14 umgibt.

Zudem ist der zweite Flansch 17 vorzugsweise mit seitlichen Bügeln 23 zum Befestigen an dem Stützelement 13 mittels vorgesehener Verbindungsmittel, z.B. Schrauben, versehen.

Vorteilhafterweise hat der erste Flansch 16 zumindest zwei Umfangsverlängerungen 24, die an im Wesentlichen diametral gegenüberliegenden Stellen angeordnet sind und mit Zapfen 25 verbunden sind, die von der mit dem Behälter 11 verbindbaren Seite vorspringen, wobei der Behälter 11 passend geformte Einführsitze 26 für die Zapfen 25 vorsieht.

Die in die Einführsitze 26 eingeführten Zapfen 25 sind dazu geeignet, der Relativdrehung des ersten Flanschs 16 gegenüber dem Behälter 11 entgegen zu wirken.

Der erste Flansch 16 ist zweckmäßigerweise mittels einer Festziehbuchse 27 an dem Behälter befestigt, die innen mit einem Gewinde versehen und auf die Muffe 15 aufgeschraubt ist, die ein entsprechendes Außengewinde vorsieht, um den ersten Flansch 16 dort festzumachen, indem er in Anlage gegen den äußeren Boden des Behälters 11 gedrückt wird.

Die Verwendung der erfindungsgemäßen Verbindungsvorrichtung ist folgende.

Der Behälter 11 wird auf das Stützelement 13 der Sanitäreinrichtung 12 aufgelegt, wobei die Muffe 15 in die Einmündungsöffnung 14 eingesetzt ist und der erste Bund 18 in den zweiten Bund 19 eingesetzt ist, während die ersten Zähne 20 gegenüber den zweiten Zähnen 21 verschoben sind.

Dann dreht der Benutzer den Behälter bezüglich der Sanitäreinrichtung so, dass der erste Flansch 16 auf dem zweiten Flansch mit dem entsprechenden ersten Bund 18 gedreht wird, der sich in den zweiten Bund 19 dreht, bis die ersten Zähne 20 mit den zweiten Zähnen 21 in Eingriff sind, die sich daran koppeln und, da sie gegen die Endansätze 22b bzw. 22a stoßen, nur die umgekehrte Drehung erlauben, um die Zähne 20 und 21 voneinander zu lösen.

In der Praxis hat sich gezeigt, wie die Erfindung die Aufgabe löst und die gesteckten Ziele erreicht, indem eine Vorrichtung zum Verbinden des Behälters mit den entsprechenden Stützelement realisiert wird, die vor der Installation der Sanitäreinrichtung vorbereitet werden kann, indem einer der Flansche mit dem Behälter und der andere mit der Sanitäreinrichtung verbunden wird.

Insbesondere erlaubt eine erfindungsgemäße Verbindungsvorrichtung in diesem Fall nämlich das wirksame Verbinden von Behälter und Sanitäreinrichtung auf viel leichtere und schneller Weise als es bei den heute bekannten Vorrichtung der Fall ist. Zum Verbinden der zwei Teile legt der Installateur nämlich einfach den Behälter auf die Sanitäreinrichtung und dreht ihn bis zum wechselseitigen Eingriff der beiden Flansche.

Die erfindungsgemäße Verbindungsvorrichtung gewährt zudem eine strukturelle Festigkeit und eine wirksame Dichtigkeit gegen Leckagen und Durchtritte von Wasser aus dem Behälter.

Die so konzipierte Erfindung kann zahlreiche Modifikationen und Variationen erfahren, die alle im Rahmen des Erfindungskonzepts liegen. Zudem können alle Details durch andere, technisch gleichwertige Elemente ersetzt werden.

In der Praxis sind die verwendeten Materialien sowie die Abmessungen und Formen je nach den Anforderungen und dem Stand der Technik frei wählbar.

Wenn in einem Anspruch auf die genannten Merkmale und Techniken Bezugszeichen folgen, so wurden diese Bezugszeichen allein zum Zwecke der besseren Verständlichkeit der Ansprüche eingefügt und haben folglich keinerlei einschränkende Wirkung auf die Auslegung eines jeden durch derartige Bezugszeichen beispielhaft bezeichneten Elements.

## Patentansprüche

1. Vorrichtung zum schnellen und lösbaren Verbinden, insbesondere für das Verbinden eines Behälters (11), in Form eines Wasserkastens außerhalb der Wand, für das Wasser mit einer Sanitäreinrichtung (12), wobei die Sanitäreinrichtung (12) ein Stützelement (13) für den Behälter (12) enthält, wobei an dem Stützelement (13) eine Einmündungsöffnung (14) für das Auslasswasser definiert ist, wobei der Behälter (11) eine Auslassmuffe (15) für das in ihm speicherbare Wasser vorsieht, die mit der Einmündungsöffnung (14) übereinstimmend geformt ist und beim Auflegen des Behälters (11) auf das Stützelement (13) gleichzeitig in diese einführbar ist, **dadurch gekennzeichnet, dass** sie zwei im Wesentlichen ringförmige Flansche (16, 17) enthält, wobei einer der beiden Flansche (16, 17) so mit dem Behälter (11) verbunden ist, dass er die Auslassmuffe (15) umgibt, während der andere der beiden Flansche (16, 17) mit dem Stützelement (13) so verbunden ist, dass er die Einmündungsöffnung (14) umgibt, wobei Mittel zum schnellen und lösbaren wechselseitigen Koppeln der zwei Flansche (16, 17) vorgesehen sind.

2. Vorrichtung zum schnellen und lösbaren Verbinden nach Anspruch 1, **dadurch gekennzeichnet, dass** die Mittel zum Koppeln zwei im Wesentlichen zylindrische und konzentrische Bünde (18, 19) umfassen, wobei ein erster Bund (18) der Bünde (18, 19) mit ersten Zähnen (20) ausgestattet ist, die von ihm in im Wesentlichen radialer Richtung nach außen vorspringen, der zweite Bund (19) der Bünde (18, 19) mit zweiten Zähnen (21) versehen ist, die von ihm in im Wesentlichen radialer Richtung nach innen vorspringen, wobei der erste Bund (18) von einem ersten Flansch (16) der zwei Flansche (16, 17) hervorsteht, der zweite Bund (19) von dem zweiten Flansch (17) der zwei Flansche (16, 17) vorsteht, wobei der erste Bund (18) in axialer Richtung in den zweiten Bund (19) einsetzbar ist, während die ersten Zähnen (20) gegenüber den zweiten Zähnen (21) verschoben sind, wobei die Flansche (16, 17) relativ zueinander umkehrbar um gemeinsame Symmetrieachsen der Bünde (18, 19), von denen der erste in den zweiten eingesetzt ist, drehbar sind, um sie über das Eingreifen bzw. Lösen der ersten Zähne (20) mit bzw. von den zweiten Zähnen (21) miteinander zu koppeln, wobei die zwei miteinander gekoppelten Flansche (16, 17) den ersten Bund (18) in den zweiten Bund (19) eingesetzt und gedreht haben und die ersten Zähne (20) sich jeweils zwischen die zweiten Zähne (21) schieben und sich daran koppeln, und der erste Flansch (16) und die zweiten Zähne (21) sich zwischen die ersten Zähne (20) und den zweiten Flansch (17) schieben, wobei Endanschlagselemente für die Relativdrehung des ersten Bunds (18) in dem zweiten Bund (19) vorgesehen sind, um den Drehweg beim Erreichen einer Konfiguration zu begrenzen, in der die ersten Zähne (20) mit den zweiten Zähnen (21) gekoppelt sind, um das wechselseitige Lösen der Bünde (18, 19) zu verhindern.

3. Vorrichtung zum schnellen und lösbaren Verbinden nach den vorhergehenden Ansprüchen, **dadurch gekennzeichnet, dass** der erste Flansch (16) so mit dem Behälter (11) verbunden ist, dass er die Auslassmuffe (15) umgibt, während der zweite Flansch (17) so mit dem Stützelement (13) verbunden ist, dass er die Einmündungsöffnung (14) umgibt.

4. Vorrichtung zum schnellen und lösbaren Verbinden nach einem oder mehreren der vorhergehenden Ansprüche, **dadurch gekennzeichnet, dass** der zweite Flansch (17) mit seitlichen Bügeln zum Befestigen an dem Stützelement (13) mittels vorgesehener Verbindungsmittel versehen ist.

5. Vorrichtung zum schnellen und lösbaren Verbinden nach einem oder mehreren der vorhergehenden Ansprüche, **dadurch gekennzeichnet, dass** der erste Flansch (16) zumindest zwei Umfangsverlängerungen (24) vorsieht, die an im Wesentlichen diametral gegenüberliegenden Stellen angeordnet sind und mit Zapfen (25) verbunden sind, die von der mit dem Behälter (11) verbindbaren Seite vorspringen, wobei der Behälter (11) passend geformte Einführsitze (26) für die Zapfen (25) vorsieht, wobei die in die Einführsitze (26) eingeführten Zapfen (25) dazu geeignet sind, der Relativdrehung des ersten Flanschs (16) gegenüber dem Behälter (11) entgegen zu wirken.

6. Vorrichtung zum schnellen und lösbaren Verbinden nach einem oder mehreren der vorhergehenden Ansprüche, **dadurch gekennzeichnet, dass** sie eine Buchse zum Festziehen des ersten Flansch (16) und des Behälters (11) vorsieht.

7. Befestigungsvorrichtung nach einem oder mehreren der vorhergehenden Ansprüche, die sich durch all das auszeichnet, was beschrieben und in den beigefügten Tafeln und Zeichnungen dargestellt ist.
